# FASCICULE DE BREVET EUROPEEN

(11) **EP 0 932 569 B1**
(45) Date de publication et mention de la délivrance du brevet: **09.01.2002**
(21) Numéro de dépôt: 97911281.0
(22) Date de dépôt: 17.10.1997
(51) Int. Cl.: B65G 51/03

(54) **DISPOSITIF DE CONVOYAGE D'OBJETS TELS QUE, NOTAMMENT, BOUTEILLES, FLACONS OU AUTRES**
VORRICHTUNG ZUM FÖRDERN VON GEGENSTÄNDEN SOWIE FLASCHEN ODER FLAKONS
DEVICE FOR CONVEYING OBJECTS SUCH AS, IN PARTICULAR, BOTTLES, FLASKS OR THE LIKE

(30) Priorité: 18.10.1996 FR 9612928; 18.10.1996 FR 9612929; 18.10.1996 FR 9612930
(43) Date de publication de la demande: 04.08.1999
(73) Titulaire: Rafale Technologie, 59840 Pérenchies (FR)
(72) Inventeur: BERNARD, Frédéric, F-59650 Villeneuve d'Ascq (FR); RONDEPIERRE, Philippe, F-59254 Ghyvelde (FR)
(74) Mandataire: Duthoit, Michel
(86) Numéro de dépôt international: FR9701856
(87) Numéro de publication internationale: WO9817557

(56) Documents cités:
- EP-A- 0 649 804
- WO-A-96/05127
- DE-B- 1 244 652
- DE-U- 9 306 657
- US-A- 5 161 919
- US-A- 5 421 678
- US-A- 5 437 521
- US-A- 5 516 239
- US-A- 5 542 789

## Description

La présente invention concerne un dispositif de convoyage d'objets tels que, notamment, bouteilles, flacons ou autres.

Toutefois, bien que plus particulièrement prévue pour de telles applications, elle pourra également être destinée, de manière générale, à tout objet présentant une extrémité munie d'une excroissance.

Actuellement, dans le domaine du convoyage, il est connu de transporter les bouteilles par soufflage d'un flux d'air sur une ou plusieurs parties de leur surface et d'assurer ainsi leur déplacement selon une direction donnée.

D'après un mode de réalisation préférentiel de ce procédé, lesdites bouteilles sont propulsées par un jet d'air agissant au niveau de leur goulot.

Les dispositifs correspondant comprennent généralement une chambre de soufflage et un rail support. La chambre de soufflage est alimentée par des ventilateurs et permet de comprimer l'air introduit, ce dernier étant ensuite projeté en direction du goulot des bouteilles par l'intermédiaire de fentes prévues à la surface de ladite chambre de soufflage.

La structure desdites fentes permet d'orienter le flux d'air projeté et d'assurer ainsi le transport des bouteilles selon la direction souhaitée.

Le rail support coopère avec une excroissance prévue au niveau du goulot des bouteilles convoyées et participe à leur guidage. Il est généralement assujetti à la face inférieure de la chambre de soufflage, aussi appelée tablier.

De nombreux organes sont rapportés sur les différentes faces de la chambre de soufflage telles que, par exemple, des armatures de soutien dudit dispositif, des guides latéraux facilitant le guidage des bouteilles au niveau de leur corps, des joues, protégeant lesdites bouteilles le long de leur trajet, et/ou autres.

Concernant les guides latéraux, dans la plupart des installations connues, ils sont assujettis au tablier. Leur positionnement est effectué par des translations d'organes mobiles les uns par rapport aux autres.

Afin d'être efficaces, lesdits guides latéraux nécessitent un réglage fin et minutieux adapté à chaque profil de bouteille transportée, tout déréglage pouvant entraîner de longs retards d'exploitation.

Bien que ces procédés de convoyage constituent une solution offrant de nombreux avantages pour le transfert de bouteilles, les dispositifs actuellement connus présentent toutefois des inconvénients.

Tout d'abord, leurs chambres de soufflage ne sont pas facilement accessibles en raison de leur structure.

En effet l'imbrication des pièces, comme dans le document WO-A 96/05127, ou l'utilisation d'une tôle pliée en U inversé, fermée à sa base par un tablier rigidifiant, comme dans les documents US-A 5 437 521, US-A 5 161 919 ou EP-A 0 649 804, n'autorisent que des démontages complets ou tout au moins, entraînent un dérèglement du positionnement des autres organes, en cas de démontage du tablier.

De plus, la structure de ce dernier est souvent renforcé afin de permettre le support, comme précédemment évoqué, de dispositifs annexes tels que des guides latéraux, des joues de protection ou autres.

Ledit tablier n'est donc pas facilement démontable et ne permet pas à l'exploitant de pouvoir mener des opérations de maintenance à l'intérieur des chambres de soufflage, tout du moins sans risquer de dérégler l'installation.

En conséquence, lesdites chambres de soufflages ne peuvent pas, notamment, être facilement rapidement nettoyées alors que, dans les domaines où lesdits dispositifs sont employés, à savoir notamment l'industrie agro-alimentaire, les exigences en matière d'hygiène sont de plus en plus élevées.

Un autre inconvénient de tels dispositifs est qu'ils sont peu modulaires. Aussi, pour une intervention à mener sur l'un de leurs organes, par exemple, une des parois de la chambre de soufflage, ils nécessitent souvent une reprise de l'installation entière et/ou entraînent le déréglage des organes voisins, par exemple, celui des guides latéraux.

On peut également remarquer que les dispositifs actuellement connus présentent de nombreux points, notamment de visseries, susceptibles, par exemple de permettre des accumulations de salissure.

Un autre inconvénient de tels dispositifs est qu'il nécessite des temps de réglage relativement longs de leurs guides latéraux. De plus, ils peuvent présenter des difficultés d'utilisation, notamment en cas d'installation de joues le long dudit dispositif.

Le but de la présente invention est de proposer un dispositif de convoyage par soufflage qui pallie les inconvénients précités et facilite le montage, le réglage, la maintenance et/ou le nettoyage.

Un autre but de la présente invention est de proposer un dispositif de convoyage par soufflage, dont la chambre de soufflage soit facilement accessible, notamment afin de faciliter son nettoyage, sans risquer de le dérégler.

Un autre but de la présente invention est de proposer un dispositif de convoyage par soufflage dont la robustesse soit améliorée.

Un autre but de la présente invention est de proposer un dispositif de convoyage par soufflage dans lequel les déformations du corps de la chambre de soufflage et/ou des éventuels guides latéraux lors du passage d'un train d'objets à convoyer ne risque pas de dérégler le rail support desdits objets.

Un autre but de la présente invention est de proposer un dispositif de convoyage par soufflage de structure modulaire.

Un autre but de la présente invention est de proposer un dispositif de convoyage par soufflage qui permette d'intervenir, par exemple, sur sa chambre de soufflage, sans altérer les réglages, notamment ceux de ses éventuels guides latéraux.

Un autre but de la présente invention est de proposer un dispositif de convoyage par soufflage dont les réglages soient simplifiés à la fois lors de l'installation et en cours d'exploitation, notamment en cas de changement de profil des objets transportés.

Un autre but de la présente invention est de proposer un dispositif de convoyage par soufflage facilitant l'utilisation d'une joue de protection des objets transportés.

Un autre but de la présente invention est de proposer un dispositif de convoyage par soufflage qui ne présente pas de zone qui puisse entraîner des rétentions de salissure, notamment de visserie apparente.

D'autres buts et avantages de la présente invention apparaîtront au cours de la description qui va suivre qui n'est donnée qu'à titre indicatif et qui n'a pas pour but de la limiter.

Le document US-A-5437521 décrit un dispositif selon la préambule de la revendication 1.

La présente invention concerne un dispositif selon la revendication 1.

La présente invention sera mieux comprise à la lecture de la description suivante accompagnée des dessins en annexe qui en font partie intégrante et parmi lesquels :
- la figure 1 est une vue transversale, en coupe, d'un exemple réalisation du dispositif de convoyage conforme à l'invention,
- la figure 2 illustre, selon la même vue, un second exemple de réalisation du dispositif de convoyage conforme à l'invention,
- la figure 3 illustre, en coupe, selon une demie vue de dessus le principe d'articulation des guides latéraux éventuellement utilisés dans le dispositif de convoyage conforme à l'invention,
- la figure 4 illustre une variante de mise en oeuvre des guides latéraux éventuellement utilisés dans le dispositif de convoyage conforme à l'invention.

La présente invention concerne un dispositif de convoyage d'objets tels que, notamment, bouteilles, flacons ou autres.

Toutefois, bien que plus particulièrement prévue pour de telles applications, elle pourra également être destinée, de manière générale, à tout objet muni d'une extrémité présentant une excroissance.

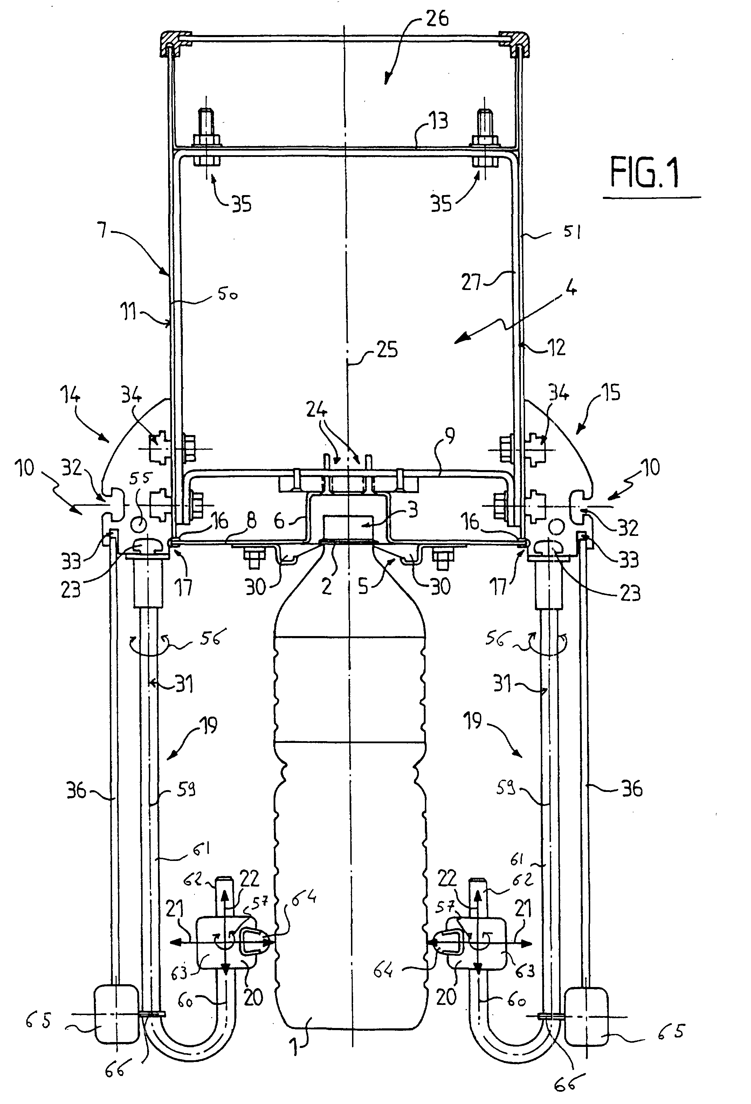

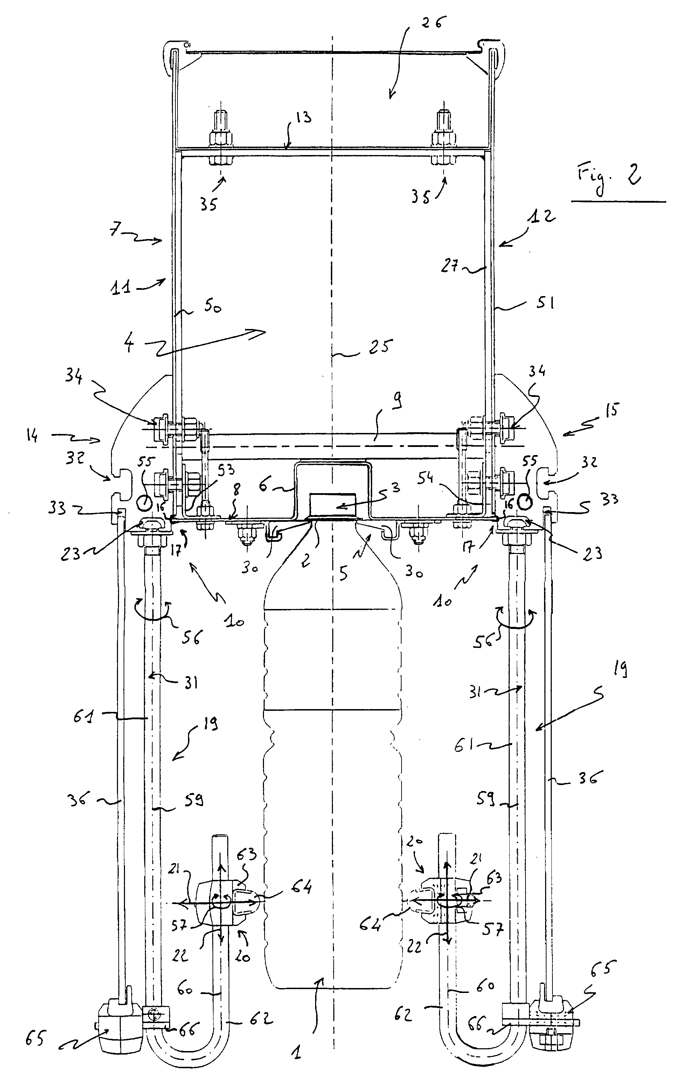

Comme présenté aux figures 1 et 2, le dispositif de convoyage conforme à l'invention permet de transporter des objets 1 présentant une excroissance 2, notamment annulaire, au niveau de leur goulot 3, par exemple, selon une direction sensiblement orthogonale au plan des figures.

Pour cela, de manière connue, ledit dispositif comprend une chambre de soufflage 4, permettant la projection d'un flux d'air apte à entraîner lesdits objets 1, selon la direction de convoyage souhaitée. Il comprend également un rail support 5, coopérant avec lesdits objets 1 au niveau de leur excroissance 2, ledit rail support 5 étant orienté selon ladite direction de convoyage.

Grâce au dispositif conforme à l'invention, lesdits objets 1, dirigés sensiblement verticalement, sont ainsi transférés sous ladite chambre de soufflage 4, par exemple d'une installation de mise en forme à une installation de remplissage.

Ladite chambre de soufflage 4 présente, notamment, au niveau de sa face inférieure un canal 6 muni de fentes, par exemple sur ses parois latérales. Lesdites fentes, non représentées aux figures 1 et 2, sont aptes à permettre la projection dudit flux d'air en direction du goulot 3 des objets 1, ce dernier circulant dans ledit canal.

Ledit rail support 5 est constitué, notamment, de deux rampes supérieures 30, en plastique et/ou en acier inoxydable qui, avec le flux d'air orienté, permet de guider lesdits objets 1 le long de leur trajet.

Selon l'invention, ladite chambre 4 est constituée d'un corps 7 et d'un tablier 8, amovible par rapport audit corps 7. Ledit rail support 5 est assujetti audit tablier 8, ce dernier définissant également, notamment, ledit canal 6.

La chambre de soufflage 4 est ainsi facilement accessible, par démontage dudit tablier 8, et son nettoyage ainsi que l'évacuation des produits utilisés à cette fin sont simplifiés.

Selon le mode de réalisation illustré, le dispositif conforme à l'invention comprend également des moyens 10 pour assurer l'étanchéïté de la liaison entre ledit tablier 8 et ledit corps 7.

Ladite chambre de soufflage 4 est prévue, par exemple, sensiblement quadrangulaire et ledit corps 7 est constitué, notamment, de deux flancs latéraux 11, 12 et d'un couvercle 13.

Ledit corps 7 est prévu ossaturé. Pour cela, lesdits flancs latéraux 11, 12 sont, par exemple rigidifiés et ledit corps 7 comprend des traverses de soutien 9, solidaires desdits flancs latéraux 11, 12.

Lesdites traverses de soutien 9 sont, par exemple, prévues régulièrement espacées le long de la chambre de soufflage 4, selon la direction de convoyage des objets 1.

Lesdits flancs latéraux 11, 12 rigidifiés comprennent, notamment, deux longerons 14, 15, prévus latéralement le long dudit corps 7, et/ou une armature de renfort, constituée d'arceaux 27, régulièrement espacés dans la même direction. Lesdits longerons 14, 15, prévus extérieurement, et lesdits arceaux 27, prévus intérieurement, prennent en sandwich des parois latérales 50, 51 dudit corps 7.

Lesdits longerons 14, 15 jouent ainsi le rôle de renforts longitudinaux et lesdites parois latérales 50, 51 peuvent, en conséquence, ne plus servir qu'à maintenir l'étanchéïté de la chambre de soufflage 4.

Selon un autre mode de réalisation, non représenté, lesdits flancs rigidifiés 11, 12 présentent, par exemple prévus dans la masse, des ailes de rigidification, disposées latéralement le long du dispositif.

Cela étant, lesdits moyens 10 pour assurer l'étanchéïté sont constitués, notamment, par lesdits longerons 14, 15, prévus solidaires de manière étanche avec ledit corps 7, et/ou par des joints 16, prévus le long dudit tablier 8, apte à coopérer, par exemple, avec lesdits longerons 14, 15.

Ces derniers permettent ainsi d'assurer une liaison étanche entre ledit corps 7 et ledit tablier 8 et d'éviter toute déperdition d'air nuisible à la qualité du soufflage.

Les joints 16 sont prévus sur les bords longitudinaux dudit tablier 8 et, selon le mode particulier de réalisation illustré, lesdits longerons 14, 15 présentent au moins une gorge 17, apte à accueillir lesdits joints 16.

Ledit corps 7 est pris en sandwich entre lesdits longerons 14, 15 et ladite traverse 9, disposé intérieurement, prévus solidaires entre eux.

Ledit corps 7 présente, éventuellement, un couvercle 13, entre ses flancs latéraux 11, 12, et lesdits arceaux 27 sont assujettis, par exemple, audit couvercle 13.

Ce dernier est prévu, éventuellement, en U et définit ainsi une goulotte 26 entre lesdits flancs latéraux 11, 12, dudit corps 7. Ladite goulotte 26 pourra permettre, notamment, de loger différents câbles électriques et/ou autres et être obturée à sa partie supérieure.

L'intérêt d'une telle disposition est qu'elle permet d'éviter une goulotte indépendante, située au-dessus et/ou à côté de la chambre de soufflage 4, et par suite de définir un interstice où pourraient s'accumuler des salissures.

Ledit arceau 27 longe, notamment, les parois latérales 50, 51 du corps 7 et présente des points d'accrochage 35 avec ledit couvercle 13.

Lesdits points d'accrochage 35 pourront servir, en outre, éventuellement, de points de maintien du dispositif au plafond du local dans lequel il est installé, notamment par l'intermédiaire de tiges, non représentées aux figures 1 et 2.

Cela étant, selon un premier mode de réalisation, illustré à la figure 1, ledit tablier 8 est assujetti à ladite traverse 9, de manière amovible, notamment par l'intermédiaire d'au moins une vis 24 et, avantageusement, grâce à deux dites vis 24, décalées par rapport à l'axe de symétrie 25 des objets à convoyer, afin d'éviter les chocs au niveau de la zone supérieure du goulot.

Lesdites vis 24 sont prévues, notamment au niveau du canal 6 dans lequel circule le goulot 3 desdits objets 1, prévu dans la partie médiane dudit tablier 8.

Lesdites traverses de soutien 9 sont constituées, par exemple, par une branche inférieure fermant ledit arceau 27.

Selon un autre mode de réalisation illustré à la figure 2, le tablier 8 est assujetti aux flancs latéraux 11, 12, par l'intermédiaire d'équerres 53, 54. Plus précisément, deux équerres 53, 54 sont, par exemple, assujetties aux flancs latéraux 11, 12 grâce à des tiges filetées boulonnées et ledit tablier 8 est assujetti auxdites équerres 53, 54 par l'intermédiaire de moyens de même nature.

Ladite traverse 9 est, par exemple, prévue droite. La précision de ses dimensions peut ainsi être améliorée et le montage / démontage du tablier 8 simplifié.

Afin de favoriser le guidage des objets 1, le dispositif conforme à l'invention comprend, en outre, par exemple, des guides latéraux 19, notamment constitués au moins d'une rampe de guidage 20, prévue le long dudit dispositif, en vis-à-vis du corps desdits objets 1 et des tiges support 31 de ladite rampe de guidage 20. La position transversale desdites rampes de guidage 20 est, par exemple, réglable selon la direction des flèches repérées 21 tandis que la position verticale desdites rampes 20 est, par exemple, réglable selon la direction des flèches repérées 22.

Selon le mode particulier de réalisation illustré, lesdites tiges support 31 et ladite rampe de guidage 20 coopèrent entre eux par articulation en rotation pour assurer le réglage de la position transversale de ladite rampe de guidage 20 par rapport auxdits objets 1, notamment en fonction de la section horizontale de ces derniers. Cela est développé plus loin.

Par ailleurs, lesdits guides latéraux 19 et ledit tablier 8 sont indépendants et permettent ainsi de pouvoir accéder après démontage dudit tablier 8 à l'intérieur de ladite chambre de soufflage 4 sans risquer de dérégler lesdits guides latéraux 19, cela permettant un gain de temps lors de l'entretien.

Pour cela, lesdits guides latéraux 19 ainsi que, éventuellement, les autres organes annexes prévus tels que, par exemple, joues 36 de protection, panneaux indicateurs, dispositifs d'arrêt des objets à convoyer ou autres, sont reportés sur les flancs latéraux rigidifiés 11, 12. Ledit tablier 8 ne supporte ainsi plus, par exemple, que ledit rail 5.

Il est à noter que la présente structure permet de renforcer la robustesse du dispositif et, notamment, d'éviter le déréglage des rampes supérieures 30 constituant le rail 5.

En effet, lors du passage de train de bouteilles, flacons ou autres, à grande vitesse, ceux-ci peuvent exercer de fortes contraintes sur les guides latéraux 19. Dans les dispositifs antérieurement connus, ces efforts sont directement reportés sur le tablier tandis que, selon l'invention, lesdits efforts sont repris par l'armature de soutien 9, au niveau de ses extrémités latérales et ne porte donc pas sur ledit tablier 8, empêchant ainsi le déréglage des rampes supérieures 30. Pour renforcer cet effet, lesdites équerres 53, 54 sont, par exemple, constituées en matériau relativement souple.

Lesdits longerons 14, 15 sont ainsi, par exemple, aptes à supporter lesdits guides latéraux 19. A cette fin, ils sont munis, notamment, de logements 23 par l'intermédiaire desquels lesdits guides latéraux 19, prévus régulièrement espacés, sont assujettis auxdits longerons 14, 15 au niveau des extrémités supérieures des tiges support 31.

Ainsi, lesdits longerons 14, 15 permettent à la fois d'assurer l'étanchéïté entre le corps 7 et le tablier amovible 8, grâce auxdites gorges 17, ainsi que de supporter, notamment, lesdits guides latéraux 19, indépendamment dudit tablier amovible 8, grâce auxdits logements 23.

De plus, lesdits longerons 14, 15 lesdits arceaux 27, lesdites équerres 53, 54 et/ou ladite traverse 9 sont assujettis les uns aux autres, notamment, par l'intermédiaire d'un système vis-écrou dans lequel la tête de la vis coopère avec au moins un logement 34, prévu dans lesdits longerons 14, 15.

Lesdits longerons 14, 15 sont aptes, en outre, par exemple, à accueillir des armatures de soutien dudit dispositif, par le sol et/ou par le plafond, non représentées, des guides latéraux 19, destinés à faciliter le transport desdits objets 1, et/ou des joues 36, destinés à protéger lesdits objets 1 lors de leur trajet.

Lesdits longerons sont prévus à l'extérieur de ladite chambre de soufflage 4, par exemple au niveau du bord inférieur de ses flancs latéraux 11, 12.

Ils présentent, notamment, au moins un premier logement 34, apte à permettre l'introduction de premiers moyens de solidarisation desdits longerons 14, 15 avec ladite chambre de soufflage 4, un second logement 32, apte à permettre l'introduction de seconds moyens de solidarisation desdits longerons 14, 15 et desdites armatures de soutien, un troisième logement 23, apte à permettre l'introduction de troisièmes moyens de solidarisation desdits longerons 14, 15 avec lesdits guides latéraux 19 et/ou différents organes de régulation du flux des objets 1.

Lesdits premiers, seconds et troisièmes logements 34, 32, 23 sont, par exemple, prévus longitudinalement le long desdits longerons, c'est-à-dire tout le long du dispositif de convoyage conforme à l'invention.

Lesdits premiers, seconds et troisièmes moyens de solidarisation sont constitués, notamment d'un système vis-écrou, la tête desdites vis étant prévue dans lesdits logements 34, 32, 23.

Lesdits longerons 14, 15 peuvent également présenter, éventuellement, une rainure 33, apte à permettre l'encastrement desdites joues 36.

Selon un premier mode de réalisation, lesdits longerons 14, 15 sont constitués d'un profilé en aluminium, éventuellement sensiblement quadrangulaire, par exemple creux.

Ainsi, d'après l'exemple de réalisation illustré, le premier logement 34 est prévu sur leur face latérale en vis-à-vis de la chambre de soufflage 4, le second logement 32 est prévu sur leur autre face latérale et ledit troisième logement 23 ainsi que ladite rainure 33 sont prévus sur leur face inférieure.

De plus, lesdits longerons 14, 15 présentent une face supérieure, éventuellement lisse et incurvée vers l'extérieur et vers le bas, de manière à éviter l'accumulation de salissures à ce niveau.

Lesdits longerons 14, 15 sont munis, en outre, éventuellement, d'un orifice de centrage 55 permettant d'assurer leur alignement longitudinal grâce à des piges de centrage, non illustrées.

A ce sujet, ledit second logement 32 peut être utilisé pour renforcer encore cet alignement grâce à des éclisses, non illustrées, prévues à chaque jonction. Il peut aussi servir, éventuellement, à accueillir des moyens de support de dispositifs annexes tels que, par exemple, des panneaux indicateurs, des dispositifs d'arrêt des objets convoyés et/ou autres.

Comme précédemment évoqué, afin de pouvoir assurer de manière facilitée le réglage de la position transversale, selon la flèche repérée 21, de la rampe de guidage 20 par rapport auxdits objets 1 et déterminer ainsi le jeu résiduel en fonction de la section horizontale de ces derniers, lesdites tiges 31 et ladite rampe 20 coopèrent entre elles au moins par articulation en rotation.

Une telle articulation permet de simplifier le réglage desdits guides latéraux 19, notamment en cas de présence de joues 36, comme cela est détaillé dans la suite.

Le dispositif conforme à l'invention comprend, par exemple, deux dites rampes de guidage 20 disposées de part et d'autre du corps desdits objets 1 avec un léger jeu résiduel. Lesdites tiges support 31 sont, notamment régulièrement espacées le long dudit dispositif.

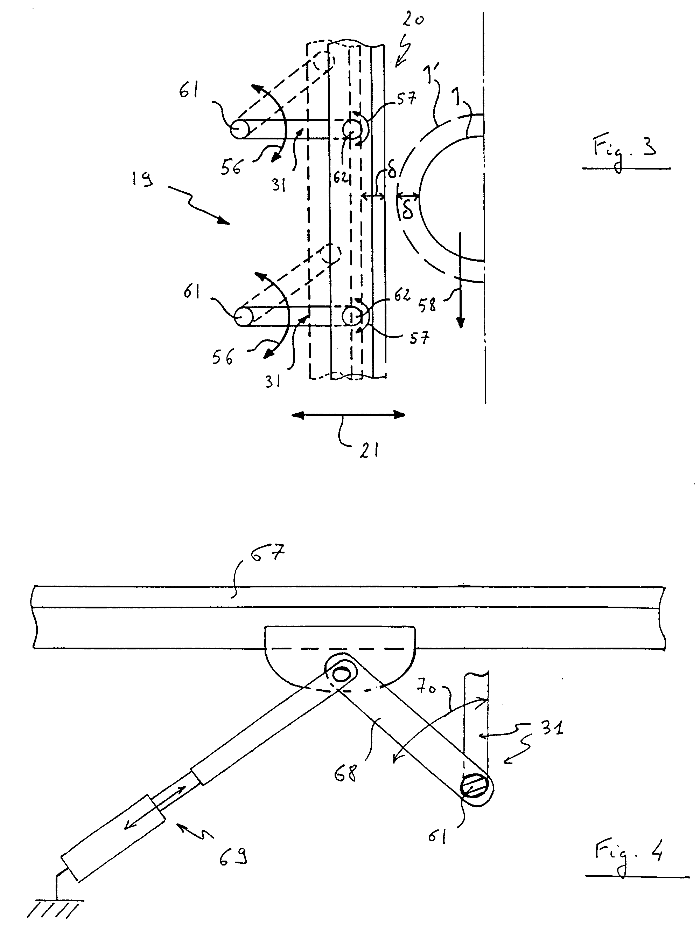

En se reportant à la figure 3, on constate que lesdites tiges 31 et ladite rampe 20 coopèrent entre elles au moins par articulation en rotation, notamment selon les flèches repérées 56, 57. Lesdits guides permettent ainsi d'assurer de manière facilitée le réglage de la position transversale, selon la flèche repérée 21, de ladite rampe 20 est adaptée à l'encombrement des objets 1, 1' transportés, comme figuré selon les traits représentés en pointillés, tandis que les tiges support 31 ou tout du moins une partie desdites tiges support 31 reste dans la même position.

De plus, grâce à de telles articulations, le réglage de la position angulaire d'une des tiges support 31 permet, par l'intermédiaire du déplacement engendré par la rampe de guidage 20 correspondante, d'entraîner simultanément les autres dites tiges support 31 coopérant avec ladite rampe 20. La mise au point du dispositif peut ainsi être effectuée plus rapidement.

A titre de remarque, à la figure 3, la direction de convoyage des objets 1 est représentée par la flèche repérée 58.

Si l'on se reporte de nouveau aux figures 1 et 2, on constate que la position verticale desdites rampes de guidage 20 peut également, éventuellement, être réglée. Ces dernières sont ainsi mobiles, par exemple, en translation le long desdits supports 31, notamment selon la flèche repérée 22.

Selon le mode de réalisation illustré, lesdites tiges support 31 sont articulables en rotation autour d'axes sensiblement verticaux 59 et ladite rampe de guidage 20 est articulable en rotation par rapport à des axes 60, également sensiblement verticaux, excentrés par rapport auxdits axes de rotation 59 des tiges 31 et solidaires desdites tiges 31. Lesdits axes 59, 60 sont ainsi, notamment sensiblement parallèles.

Lesdites rampes de guidage 20 et leur tige support 31 peuvent donc être réglées, par exemple, au moment de l'installation du dispositif et/ou entre chaque changement de types d'objets 1 à transporter. Lors du convoyage desdits objets, lesdites rampes de guidage 20 et leur tige support 31 sont naturellement bloquées en position.

Selon le mode particulier de réalisation illustré, lesdites tiges support 31 desdits guides latéraux 19 se présentent sous la forme d'un U. L'une des branches 61 dudit U se trouve le long dudit axe de rotation 59 tandis que l'autre 62 se trouve le long dudit axe excentré 60 et permet d'assurer le positionnement vertical de ladite rampe de guidage 20, libre en rotation autour de ladite branche 62.

L'une 61 des branches du U peut être plus longue que l'autre 62 et les guides latéraux 19 se présentent alors sous la forme d'une crosse.

Lesdites rampes de guidage 20 sont constituées, par exemple, de rotules 63, coopérant avec lesdites tiges 31, dans lesquelles coulissent une tringle de guidage 64, prévue le long de la trajectoire desdits objets 1.

Selon un premier mode de réalisation, lesdits guides latéraux 19 sont soutenus par ladite chambre de soufflage 4. Plus précisément, ladite chambre de soufflage 4 est prévue quadrangulaire et lesdits guides latéraux 19 sont soutenus, par exemple, par la face intérieure et/ou les faces latérales de ladite chambre de soufflage 4.

Selon un autre mode de réalisation, correspondant à ceux illustrés, lesdits guides latéraux 19 sont soutenus par des longerons 14, 15, éventuellement prévus dans le dispositif conforme à l'invention de part et d'autre dudit rail 5 le long de ladite chambre de soufflage 4.

Par ailleurs, lesdites tiges support 31 sont aptes, par exemple, à permettre le soutien de joues 36, destinées à protéger lesdits objets le long de leur trajectoire. Pour cela, le dispositif conforme à l'invention comprend, notamment, des armatures de soutien 65 desdites joues 36 coopérant avec lesdites tiges 31 par l'intermédiaire de brides 66 dans lesquelles lesdites tiges 31 sont libres en rotation.

Comme illustrées à la figure 4, lesdites tiges 31 sont aptes, en outre, éventuellement, à supporter une seconde tringle de guidage latérale 67, par exemple, par l'intermédiaire d'une biellette 68, articulée en rotation, d'une part, autour desdites tiges 31, plus particulièrement de leur branche 61, et, d'autre part, de ladite seconde tringle 67.

Un vérin à piston 69, rapporté sur une partie fixe du dispositif, contrôle la rotation, selon la flèche repérée 70, de ladite biellette 68 autour de ladite branche 61.

L'entraxe desdites secondes tringles 67 peut ainsi être réglé et permet, en cours d'exploitation, alors que l'entraxe des premières tringles 64 est fixé, d'autoriser une modulation du guidage latéral pour l'adapter, par exemple, d'une bouteille d'un litre à une bouteille, moins large, d'un demi litre et vice versa.

Naturellement, d'autres modes de mise en oeuvre à la portée de l'homme de l'art, auraient pu être envisagés sans pour autant sortir du cadre des revendications.

## Revendications

1. Dispositif de convoyage d'objets (1) tels que, notamment, bouteilles, flacons ou autres, présentant une excroissance (2) au niveau de leur goulot (3), comprenant une chambre de soufflage (4), permettant la projection d'un flux d'air apte à entraîner lesdits objets (1), et un rail support (5), coopérant avec lesdits objets (1) au niveau de ladite excroissance (2), ladite chambre (4) étant constituée d'un corps (7), présentant des flancs latéraux (11, 12) et des traverses de soutien (9), et d'un tablier (8), auquel est assujetti ledit rail support, (5) lesdits flancs latéraux (11, 12) étant prévus rigidifiés par lesdites traverses de soutien (9), solidaires desdits flancs latéraux (11, 12), les traverses de soutien (9) étant disposées à l'intérieur de ladite chambre de soufflage (4), ledit tablier étant amovible par rapport audit corps, **caractérisé par** deux longerons, prévus latéralement le long dudit corps (7), de façon à ossaturer ledit corps (7) en vue de pouvoir rendre amovible ledit tablier (8) par rapport audit corps (7).

2. Dispositif selon la revendication1, comprenant des moyens (10) pour assurer l'étanchéïté de la liaison entre ledit tablier (8) et ledit corps (7).

3. Dispositif selon la revendication 2, dans lequel lesdits moyens (10) pour assurer l'étanchéïté sont constitués par lesdits longerons (14, 15), prévus solidaires de manière étanche avec ledit corps (7) et/ou par des joints (16) prévus le long dudit tablier (8), aptes à coopérer avec lesdits longerons (14, 15).

4. Dispositif selon la revendication 3, dans lequel lesdits longerons (14, 15) présentent au moins une gorge (17), apte à accueillir lesdits joints (16).

5. Dispositif selon la revendication 1, dans lequel lesdits flancs latéraux (11, 12) présentent en outre une armature de renfort, constituée d'arceaux (27), régulièrement espacés dans la même direction, prenant en sandwich avec lesdits longerons (14, 15) des parois latérales (50, 51) dudit corps (7).

6. Dispositif selon la revendication 1, comprenant, en outre, des guides latéraux (19), aptes à faciliter le guidage des objets (1), et dans lequel lesdits longerons (14, 15) prévus munis de logements (23) sont aptes à supporter lesdits guides latéraux (19).

7. Dispositif selon la revendication 6, dans lequel lesdits guides latéraux (19) sont constitués au moins d'une rampe de guidage (20) prévue le long dudit dispositif, en vis-à-vis du corps desdits objets (1) et de tiges support (31) de ladite rampe de guidage (20), lesdites tiges (31) et ladite rampe (20) coopérant entre elles au moins par articulation en rotation de manière à assurer le réglage de la position transversale de ladite rampe (20) par rapport auxdits objets (1).

8. Dispositif selon la revendication 5, dans lequel ledit corps (7) présente un couvercle (13) et lesdits arceaux (27) sont assujettis audit couvercle (13).

9. Dispositif selon la revendication 8, dans lequel ledit couvercle (13), prévu en U, définit une goulotte (26) entre lesdits flancs latéraux (11, 12).

10. Dispositif selon la revendication 6, dans lequel lesdits longerons (14, 15) sont aptes à accueillir au moins lesdites armatures de soutien dudit dispositif, lesdits guides latéraux (19), destinés à faciliter le transport desdits objets (1) et/ou des joues (36), destinées à protéger lesdits objet lors de leur trajet.

11. Dispositif selon la revendication 10, dans lequel lesdits longerons (14, 15) présentent au moins :
- une premier logement (34), apte à permettre l'introduction de premiers moyens de solidarisation desdits longerons (14, 15) avec ladite chambre de soufflage (4),
- un second logement (32), apte à permettre l'introduction de seconds moyens de solidarisation desdits longerons (14, 15) et desdits armatures de soutien,
- un troisième logement (23), apte à permettre l'introduction de troisièmes moyens de solidarisation desdits longerons (14, 15) avec lesdits guides latéraux (19).

12. Dispositif selon la revendication 11, dans lequel lesdits longerons (14, 15) présentent une rainure (33) apte à permettre l'encastrement dudit joue (36).

13. Dispositif selon la revendication 1, dans lequel lesdits longerons (14, 15) sont constitués d'un profil en aluminium.

14. Dispositif selon la revendication 12, dans lequel lesdits longerons (14, 15) sont sensiblement quadrangulaires, le premier logement (34) étant prévu sur leur face latérale en vis-à-vis de la chambre de soufflage (4), le second logement (23) ainsi que ladite rainure (36) étant prévus sur leur face inférieure.

15. Dispositif selon la revendication 14, dans lequel lesdits longerons (14, 15) présentent une face supérieure lisse et incurvée vers l'extérieur et vers le bas de manière à éviter l'accumulation de salissures.

16. Dispositif selon la revendication 6, dans lequel lesdites tiges support (31) sont articulables en rotation autour d'axes sensiblement verticaux (59) et ladite rampe de guidage (20) est articulable par rapport à des axes (60), également sensiblement verticaux, excentrés par rapport auxdits axe de rotation (59) des tiges (31) et solidaires desdites tiges (31).

17. Dispositif selon la revendication 16, dans lequel lesdites tiges support (31) desdits guides latéraux (19) se présentent sous la forme d'un U, l'une des branches (61) dudit U se trouvant le long dudit axe de rotation (59), et l'autre (62) permettant d'assurer le positionnement vertical de ladite rampe de guidage (20), libre en rotation autour de ladite autre branche (62).

## Patentansprüche

1. Vorrichtung zur Förderung von Gegenständen (1), wie nämlich Flaschen, Fläschchen oder dergleichen, welche einen Auswuchs (2) im bereich ihres Halses (3) aufweisen, umfassend eine Blaskammer (4), welche das Projektieren eines Luftstromes, geeignet, die genannten Gegenstände (1) mitzunehmen, erlaubt, und eine Tragschiene (5), die mit den genannten Gegenständen (1) im Bereich des genannten Auswuchses (2) zusammenwirkt, wobei die genannten Kammer (4) aus einem Körper (7), der Seitenflanken (11, 12) und Stützquerträger (9) aufweist, und einer Schürze (8) besteht, an der die genannte Tragschiene (5) befestigt ist, wobei die genannten Seitenflanken (11, 12) durch die genannten, fest mit den genannten Seitenflanken (11, 12) verbundenen Stützquerträger (9) versteift vorgesehen sind, die Stützquerträger (9) innerhalb der genannten Blaskammer (4) angeordnet sind und die genannten Schürze bezüglich des genannten Körpers abnehmbar ist, **gekennzeichnet durch** zwei Längsträger, die am genannten Körper (7) in Längsrichtung derartig vorgesehen sind, daß sie das Gerippe des genannten Körpers (7) bilden, um die genannte Schürze (8) bezüglich des genannten Körpers (7) abnehmbar machen zu können.

2. Vorrichtung nach Anspruch 1, umfassend Mittel (10) zum Gewährleisten der Verbindungsdichtigkeit zwischen der genannten Schürze (8) und dem genannten Körper (7).

3. Vorrichtung nach Anspruch 2, bei der die genannten Mittel (10) zum Gewährleisten der Dichtigkeit aus den genannten Längsträgern (14, 15), die fest und abdichtend mit dem genannten Körper (7) verbunden vorgesehen sind, und/oder aus die genannte Schürze (8) entlang vorgesehenen Dichtungen (16), geeignet, mit den genannten Längsträgern (14, 15) zusammenzuwirken, bestehen.

4. Vorrichtung nach Anspruch 3, bei der die genannten Längsträgern (14, 15) wenigstens eine Nut (17) aufweisen, geeignet, die genannten Dichtungen (16) aufzunehmen.

5. Vorrichtung nach Anspruch 1, bei der die genannten Seitenflanken (11, 12) außerdem eine Verstärkungsbewehrung aufweisen, die aus in derselben Richtung regelmäßig beabstandeten Bögen (27) bestehen, die zusammen mit den genannten Längsträgern (14, 15) Seitenwände (50, 51) des genannten Körpers (7) sandwichartig umfassen.

6. Vorrichtung nach Anspruch 1, umfassend außerdem Seitenführungsschienen (19), geeignet, die Führung der Gegenstände (1) zu erleichtern, und bei der die genannten, mit Aussparungen (23) versehen vorgesehenen Längsträger (14, 15) geeignet sind, die genannten Seitenführungsschienen (19) zu tragen.

7. Vorrichtung nach Anspruch 6, bei der die genannten Seitenführungsschienen (19) wenigstens aus einer Führungsrampe (20), die die genannte Vorrichtung entlang, gegenüber dem Körper der genannten Gegenstände (1) vorgesehen ist, und aus Tragstangen (31) für die genannte Führungsrampe (20) bestehen, wobei die genannten Stangen (31) und die genannte Rampe (20) wenigstens über ein Gelenk drehbar mit einander zusammenwirken, derartig daß die Justierung der Querlage der genannten Rampe (20) bezüglich der genannten Gegenstände (1) gewährleistet wird.

8. Vorrichtung nach Anspruch 5, bei der der genannte Körper (7) einen Deckel (13) aufweist und die genannten Bögen (27) am genannten Deckel (13) befestigt sind.

9. Vorrichtung nach Anspruch 9, bei der der genannte, U-förmig vorgesehene Deckel (13) eine Rinne (26) zwischen den genannten Seitenflanken (11, 12) definiert.

10. Vorrichtung nach Anspruch 6, bei der die genannten Längsträger (14, 15) geeignet sind, wenigstens die genannten Stützbewehrungen der genannten Vorrichtung, die genannten Seitenführungsschienen (19) zum Erleichtern der Beförderung der genannten Gegenstände (1) und/oder Seitenplatten (26) zum Schützen der genannten Gegenstände auf deren Weg aufzunehmen.

11. Vorrichtung nach Anspruch 10, bei der die genannten Längsträger (14, 15) wenigstens folgendes aufweisen :
- eine erste Aussparung (34), geeignet, die Einführung von ersten Mitteln, um die genannten Längsträger (14, 15) fest mit der genannten Blaskammer (4) zu verbinden, zu erlauben,
- eine zweite Aussparung (32), geeignet, die Einführung von zweiten Mitteln, um die genannten Längsträger (14, 15) fest mit den genannten Stützbewehrungen zu verbinden, zu erlauben,
- eine dritte Aussparung (23), geeignet, die Einführung von dritten Mitteln, um die genannten Längsträger (14, 15) fest mit den genannten Seitenführungsschienen (19) zu verbinden, zu erlauben.

12. Vorrichtung nach Anspruch 11, bei der die genannten Längsträger (14, 15) eine Nut (33) aufweisen, geeignet, die Einfügung der genannten Seitenplatte (36) zu erlauben.

13. Vorrichtung nach Anspruch 1, bei der die genannten Längsträger (14, 15) aus einem Aluminium-Profileisen bestehen.

14. Vorrichtung nach Anspruch 12, bei der die genannten Längsträger (14, 15) im wesentlichen viereckig sind, wobei die erste Aussparung (34) an deren Seitenfläche gegenüber der Blaskammer (4), die zweite Aussparung (23) sowie die genannte Nut (36) an deren unteren Fläche vorgesehen sind.

15. Vorrichtung nach Anspruch 14, bei der die genannten Längsträger (14, 15) eine glatte und nach außen und nach unten gebogene obere Fläche aufweisen, sodaß die Anhäufung von Schmutz vermieden wird.

16. Vorrichtung nach Anspruch 6, bei der die genannten Tragstangen (31) um im wesentlichen senkrechten Achsen (59) drehbar gelenkig sind und die genannte Führungsrampe (20) bezüglich Achsen (60) gelenkig ist, die ebenfalls im wesentlichen senkrecht, exzentrisch zu den genannten Drehachsen (59) der Stangen (31) und fest mit den genannten Stangen (31) verbunden sind.

17. Vorrichtung nach Anspruch 16, bei der die genannten Tragstangen (31) der genannten Seitenführungsschienen (19) U-formig ausgestaltet sind, wobei sich einer der Schenkel (61) des genannten U die genannte Drehachse (59) entlang befindet und der andere (62) es erlaubt, die senkrechte Positionierung der genannten Führungsrampe (20), freidrehend um den genannten anderen Schenkel (62), zu gewährleisten.

## Claims

1. Device for conveying objects (1) such as, in particular, bottles, flasks or others, having a protuberance (2) in the area of their necks (3), including a blowing chamber (4), permitting the projection of a stream of air capable of driving said objects (1), and a support rail (5), co-operating with said objects (1) in the area of said protuberance (2), said chamber (4) being constituted by a body (7) having lateral sides (11, 12) and supporting cross-members (9), and by an apron (8), to which is secured said support rail (5), said lateral sides (11, 12) being designed to be rigidified by said supporting cross-members (9), integral with said lateral sides (11, 12), the supporting cross-members (9) being disposed inside said blowing chamber (4), said apron being removable in relation to said body, **characterised by** two longitudinal members, provided laterally along said body (7) so as to provide said body (7) with a frame with a view to being able to make said apron (8) removable in relation to said body (7).

2. Device according to claim 1, including means (10) for ensuring the air tightness of the connection between said apron (8) and said body (7).

3. Device according to claim 2, in which said tightness ensuring means (10) are constituted by said longitudinal members (14, 15) designed to be sealingly integral with said body (7) and/or by seals (16) provided along said apron (8), capable of co-operating with said longitudinal members (14, 15).

4. Device according to claim 3, in which said longitudinal members (14, 15) have at least one groove (17), capable of accommodating said seals (16).

5. Device according to claim 1, in which said lateral sides (11, 12) further have a reinforcement, constituted by bow members (27), regularly spaced in the same direction, sandwiching with said longitudinal members (14, 15) lateral walls (50, 51) of said body (7).

6. Device according to claim 1, further including lateral guides (19), capable of facilitating the guiding of the objects (1), and in which said longitudinal members (14, 15), designed to be provided with housings (23), are capable of supporting said lateral guides (19).

7. Device according to claim 6, in which said lateral guides (19) are constituted at least by a guide rail (20) provided along said device, opposite the bodies of said objects (1), and by rods (31) for supporting said guide rail (20), said rods (31) and said rail (20) co-operating with one another at least by articulation in rotation so as to ensure adjustment of the transverse position of said rail (20) in relation to said objects (1).

8. Device according to claim 5, in which said body (7) has a cover (13) and said bow members (27) are secured to said cover (13).

9. Device according to claim 8, in which said cover (13), designed as a U, defines a channel (26) between said lateral sides (11, 12).

10. Device according to claim 6, in which said longitudinal members (14, 15) are capable of accommodating at least said support members of said device, said lateral guides (19), designed to facilitate the transport of said objects (1), and/or cheek members (36), designed to protect said objects as they travel along.

11. Device according to claim 10, in which said longitudinal members (14, 15) have at least:
- a first housing (34), capable of permitting the introduction of first means for rendering said longitudinal members (14, 15) integral with said blowing chamber (4),
- a second housing (32), capable of permitting the introduction of second means for rendering said longitudinal members (14, 15) and said support members integral,
- a third housing (23), capable of permitting the introduction of third means for rendering said longitudinal members (14, 15) integral with said lateral guides (19).

12. Device according to claim 11, in which said longitudinal members (14, 15) have a groove (33) capable of enabling said cheek member (36) to be fitted.

13. Device according to claim 1, in which said longitudinal members (14, 15) are constituted by an aluminium section.

14. Device according to claim 12, in which said longitudinal members (14, 15) are substantially quadrangular, the first housing (34) being provided on their lateral face opposite the blowing chamber (4), the second housing (23) as well as said groove (33) being provided on their lower face.

15. Device according to claim 14, in which said longitudinal members (14, 15) have a smooth upper face, curving outwards and downwards so as to prevent dirt from accumulating.

16. Device according to claim 6, in which said support rods (31) are articulatable in rotation about substantially vertical axes (59) and said guide rail (20) is articulatable in relation to axes (60), also substantially vertical, offcentred in relation to said axes of rotation (59) of the rods (31) and integral with said rods (31).

17. Device according to claim 16, in which said support rods (31) of said lateral guides (19) take the form of a U, one of the arms (61) of said U lying along said axis of rotation (59), and the other (62) making it possible to ensure the vertical positioning of said guide rail (20), which is free to rotate about said other arm (62).
